Europäisches Patentamt

European Patent Office

Office européen des brevets

(11) Publication number: **0 372 703**
**A2**

## (12) EUROPEAN PATENT APPLICATION

(21) Application number: 89311033.8

(22) Date of filing: 26.10.89

(51) Int. Cl.⁵: **G06F 15/40, G06F 15/42**

(30) Priority: 28.10.88 JP 270925/88
28.10.88 JP 270926/88
28.10.88 JP 270927/88

(43) Date of publication of application:
**13.06.90 Bulletin 90/24**

(84) Designated Contracting States:
**DE FR GB**

(71) Applicant: **HITACHI MAXELL LTD.**
**1-88 Ushitora-1-chome**
**Ibaraki-shi Osaka(JP)**

(72) Inventor: **Kitta, Kenichi**
**2-2-304 Togashira-1-chome**
**Toride-shi(JP)**

(74) Representative: **Williams, Trevor John et al**
**J.A. KEMP & CO. 14 South Square Gray's Inn**
**London WC1R 5EU(GB)**

(54) Information management system and medium used with the same system.

(57) In an information management system in which necessary image information can be retrieved by a plurality of retrieval units (3) independently of each other from a single file (7) carrying image information registered therein for various persons, a recording medium is allocated to every person and a part of or all of the image information registered for a person in the file is recorded from the file into the recording medium allocated for the person so that the image information in the recording medium can be retrieved by selected one of the retrieval units. Each recording medium has a user's area carrying various kinds of image information recorded therein and pertaining to the possessor of the recording medium, and the user's area includes a specific area carrying a processing program stored therein, so that the processing program is read out from the recording medium and stored in a image processing unit and the image information read out from the recording medium is processed by the image processing unit in accordance with the processing program.

FIG. I

# INFORMATION MANAGEMENT SYSTEM AND MEDIUM USED WITH THE SAME SYSTEM

## BACKGROUND OF THE INVENTION

The present invention relates to a system for processing personal information such as medical service information and also relates to a medium such as a magneto-optical disk for use with the same system.

In recent years, the need of efficient information management has increased with the increase in quantity of information in many fields. Taking a hospital as an example, not only Kartes or cards must be preserved for every patient but also diagnostic photographs such as X-ray photographs, ultrasonic photographs and the like and image information such as computerized tomograms and the like must be preserved. Such information increases in quantity as patients increase in number. If past information for all patients is to be thoroughly preserved to make it possible to see anamnesis for every patient, the quantity of information becomes very large.

Therefore, a system in which the information is allocated to every patient to collectively manage the information for every patient by means of a single file has been used in large hospitals, so that information pertaining to a certain patient can be retrieved when the patient is designated.

However, a considerable time is required for information retrieval on the designated patient when the quantity of information is large. Further, a long time is required for retrieving information pertaining to the patient from the large-scaled file whenever the patient is examined.

There is a case where a certain patient is diagnosed by using an X-ray photography in one hospital and if necessary as a result of the diagnosis the hospital requests another hospital to examine the patient more precisely. In this case, the other hospital sometimes carry out again the same diagnostic procedure as that carried out in the first hospital on the patient so as to perform precise medical examination. As described above, the patient may be subjected to X-ray diagnosis for one and the same disease repeatedly plural times, so that the quantity of exposure to X-rays increases undesirably.

Further, there is a case where a patient attending one hospital wishes to attend another hospital different from the one hospital for one and the same disease. In this case, the hospital newly attended by the patient has no method of knowing the case history except knowing the same directly from the patient. Accordingly, there arises a problem in reliability on the case history as materials for diagnosis.

Furthermore, in such an apparatus for retrieving necessary image information from the file under collective management and for displaying the image information, it is required to store a processing program for processing the image information. When various image display modes are to be employed, the scale of the processing program is enlarged to require a large-capacity memory as a program memory.

## SUMMARY OF THE INVENTION

A first object of the present invention is to provide an information management system in which all the necessary information can be obtained accurately and speedily even from a large quantity of information.

A second object of the present invention is to provide an information management system in which all the necessary information for a certain patient can be taken out accurately and speedily through computer communication from diagnostic information stored in a computer in a hospital previously attended by the patient (as an outpatient) so that the taken out necessary information can be used for the patient.

A third object of the present invention is to provide an information management system in which all the necessary information can be obtained accurately and speedily from a large quantity of information and in which the capacity of a program memory in an image processing apparatus in the information processing system can be reduced.

To attain the first and second objects, according to an aspect of the present invention, in the information management system in which it is made possible to retrieve necessary image information from a single file having image information registered therein for every individual person through a plurality of retrieval units independently of each other, a recording medium is allocated to every person so that a part of or all of image information registered in a file for one person is recorded in the recording medium allocated to the person so that the image information of the recording medium can be retrieved by the retrieval units.

To attain the aforementioned objects, according to another aspect of the present invention, respective pieces of information pertaining to patients are separately recorded in recording media correspondingly respectively allocated to the persons so that each recording medium is made to be in the possession of one specific person and index information for expressing the possessor of the recording medium is also recorded in the recording medium. Each of those recording media is combined with the information management system and in use the index information is read from the recording medium and displayed so that the possessor of the recording medium can be checked and necessary information can be taken out from the recording medium based on the result of the checking.

To attain the third object, according to a further aspect of the present invention, in the information management system, each recording medium has an user's area for recording image information therein for identifying the possessor of the recording medium, the user's area including a specific portion for storing a processing program therein, the information read out from the recording medium being processed by an image processing unit according to a processing program which is read out from a specific area of the user's area and stored in the image processing unit.

The operations and advantages of the aforementioned constructions are as follows.

Because information is recorded in a recording medium for every person, a large quantity of information can be dispersed to remarkably reduce the quantity of information as a subject of each retrieval so that the retrieval can be executed speedily. Further, a single file can be used commonly to the retrieval units, and information registered in other hospitals can be used.

Because information is recorded in a recording medium for every person, a large quantity of information can be dispersed to remarkably reduce the quantity of information as a subject of retrieval. Further, the correspondence between the possessor of a recording medium and information recorded in the recording medium can be exactly checked by the image display of index information. Accordingly, information retrieval can be executed speedily and accurately.

Because information is recorded in a recording medium for every person, a large quantity of information can be dispersed to remarkably reduce the quantity of information as a subject of retrieval. Further, there is no necessity of storing the program for processing the information in the image processing unit. Accordingly, the capacity of the program memory can be reduced.

## BRIEF DESCRIPTION OF THE DRAWINGS

Fig. 1 is a block diagram showing an embodiment of the information management system according to the present invention;

Fig. 2 is a view showing a specific example of the contents recorded in a user's area of an optical disk depicted in Fig. 1;

Fig. 3 is a flow chart showing the operation of the system depicted in Fig. 1 in the case where the optical disk depicted in Fig. 2 is used;

Fig. 4 is a view showing another specific example of the contents recorded in the user's area of the optical disk depicted in Fig. 1;

Fig. 5 is a flow chart showing the operation of the system depicted in Fig. 1 in the case where the optical disk depicted in Fig. 4 is used; and

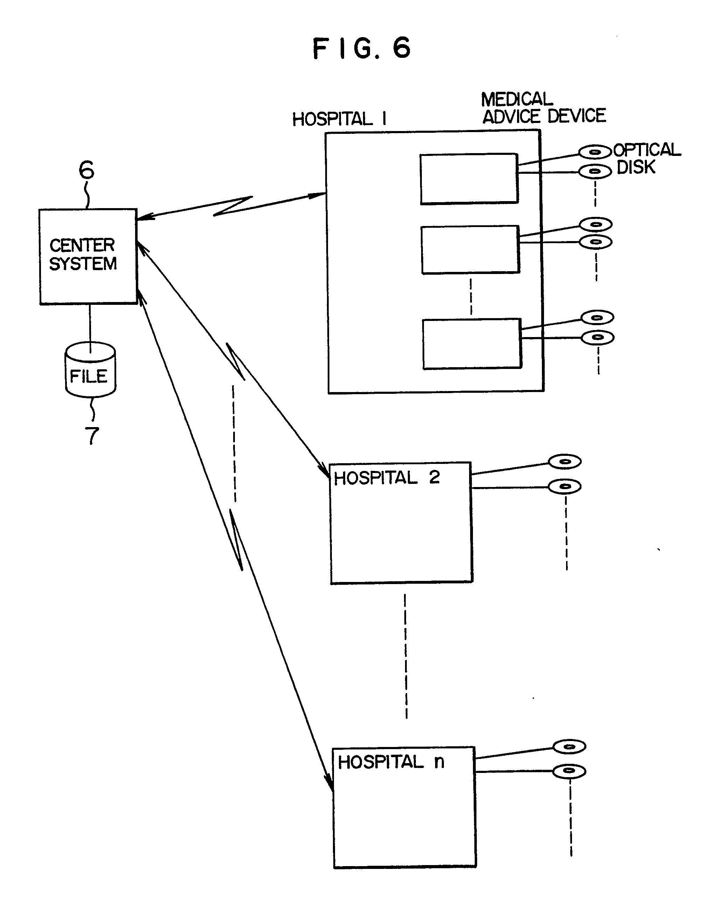

Fig. 6 is a block diagram showing another embodiment of the information management system according to the present invention.

## DESCRIPTION OF THE PREFERRED EMBODIMENTS

The present invention will be described hereunder as to preferred embodiments thereof with reference to the accompanying drawings.

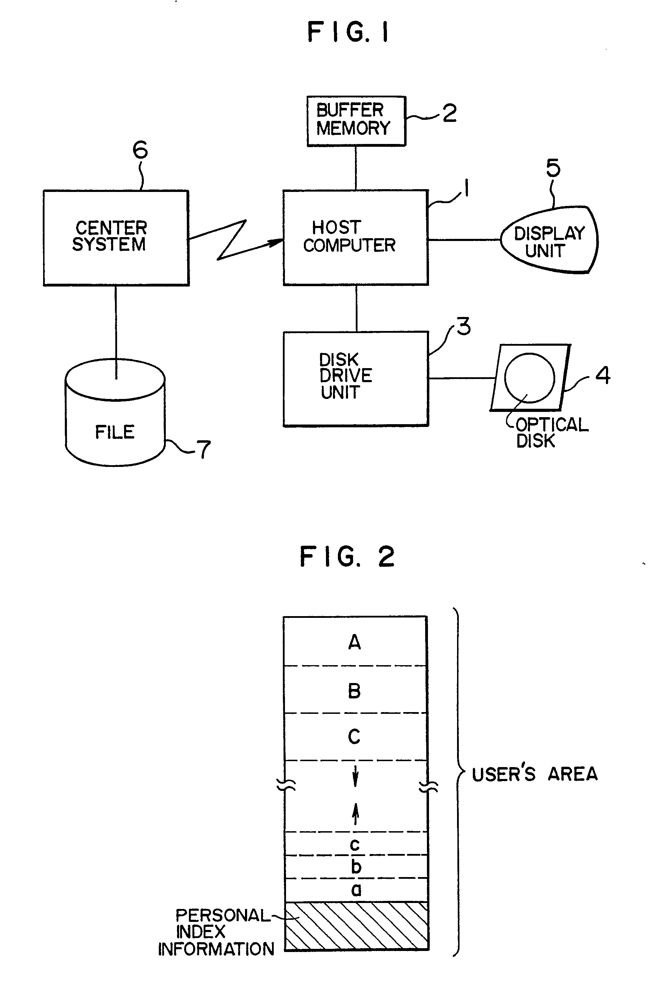

Fig. 1 is a block diagram showing an embodiment of the information management system according to the present invention. In Fig. 1, the system includes a host computer 1, a buffer memory 2, a disk drive unit 3, an optical disk 4, a display unit 5, a center system 6, and a file 7.

Although this embodiment shows the case where the present invention is applied to a medical institution such as a hospital, it is a matter of course that the present invention is not limited to this specific embodiment.

In Fig. 1, the host computer 1, the buffer memory 2, the disk drive unit 3 and the display unit 5 which serve, in combination, as a medical advice device are placed in a hospital, for example, on a desk of every doctor. The optical disk 4 is in the possession of every patient. All the medical advice devices are connected to the center system 6 having the file 7 in which medical service information (image information such as X-ray photographs, computerized tomograms, and the like) for every patient is thoroughly accumulatively stored.

Image information, such as X-ray photographs, computerized tomograms, and the like, obtained by past diagnoses on the possessor of the optical disk (which information will be called "personal medical service information") is recorded in the optical disk 4. As shown in Fig. 2, the optical disk 4 has a user's area so that a user can record/reproduce user's information onto/from the user's area. Personal medical service information A, B, C, ... ... and directory information a, b, c, ... ... for the personal medical information are recorded in the user's area. Further, information such as a fabce photogarph for identifying the possessor of the optical disk (hereinafter, which information will be referred to as "personal index information") is recorded in a specific portion of the user's area. The directory information is composed of information such as the information name of the personal medical service information, the recording position in the user's area (the start address and the data length), the recording date, and the like. In Fig. 2, the directory information a corresponds to the personal medical service information A. Similarly to this, the respective director information b, c, ... ... similarly corresponds to the personal medical service information B, C, ... ... The personal medical service information is recorded in alphabetical order in the direction of the arrow shown in Fig. 2 (for example, from the inner circumferential side of the optical disk 4 to the outer circumferential side thereof). With the recording of the personal medical service information, the directory information is recorded in alphabetical order in the reverse direction (for example, from the outer circumferential side of the optical disk 4 to the inner circumferential side thereof). It is a matter of course that the respective information is recorded in the direction of scanning of a head (in the case of the optical disk, from the inner circumferential side to the outer circumferential side).

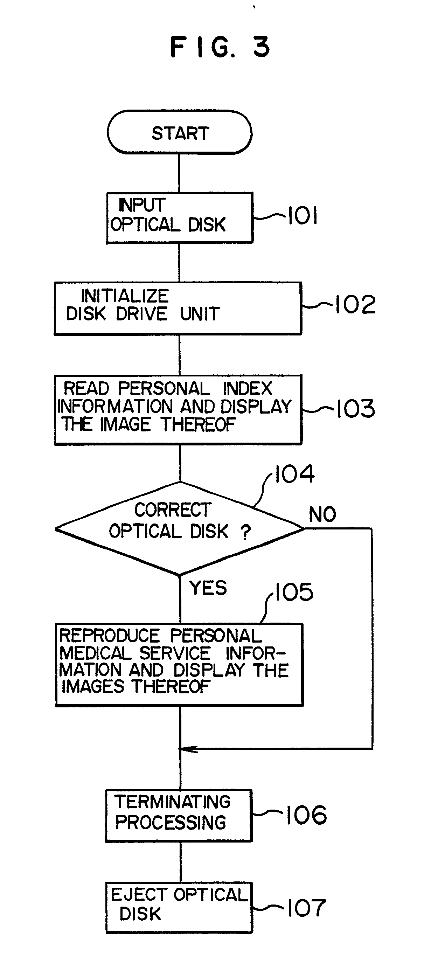

In the following, the operation of this embodiment is described with reference to the flow chart of Fig. 3 in the case where the optical disk as shown in Fig. 2 is used.

For example, a doctor receives an optical disk 4 from a patient and inserts the optical disk 4 into the disk drive unit 3 (Step 101). If the doctor makes a predetermined starting operation. The host computer 1 feeds predetermined information to the disk drive unit 3 to perform initialization of the disk drive unit 3 (Step 102). When the host computer 1 gets some response from the disk drive unit 3 after completion of the initialization, the host computer 1 makes the disk drive unit 3 start to read personal index information from the specific area of the user's area in the optical disk 4 (Fig. 2). The personal index information thus read is processed by the host computer 1, and the processed information is fed, as an image signal, to the display unit 5. As a result, an image such as a face photograph for identifying the true possessor of the inserted optical disk 4 is displayed on the display unit 5 (Step 103).

Assuming now that the image to be displayed is a face photograph, then the doctor compares by eyes the face photograph with the patient which has brought the optical disk 4 with him (Step 104). When the two coincide with each other, the doctor makes a predetermined operation to carry out the retrieval and reproduction of necessary personal medical service information from the optical disk 4 because medical service information for the patient who has brought the optical disk 4 is recorded in the optical disk 4. The retrieval is carried out in a manner as follows. Let the personal medical service information A and C in Fig. 2 be X-ray photographs. Let the personal medical service information B in Fig. 2 be a computerized tomogram. When the doctor designates the information name as "X-ray photograph", the computer 1 controls the disk drive unit 3 to read directory information from the optical disk 4. Because the information name coincides with the designated "X-ray photograph" when the directory information a is read, information pertaining to the recording position of the personal medical service information A is detected from the directory information a. The personal medical service information A is read out from the optical disk 4 based on the information pertaining to the recording position. The personal medical service information A thus obtained is processed by the host computer 1 in the same manner as the personal index information, so that the processed information is fed, as an image signal, to the display unit 5. Accordingly, the X-ray photograph is displayed on the display unit 5. When the doctor makes a predetermined operation with no change of the designation of the information name, pieces of personal medical service information on X-ray photographs are successively reproduced from the optical disk 4, so that the X-ray photographs are successively displayed on the display unit 5. It is a matter of course that X-ray photographs on a designated date can be searched and displayed by designation of the date. Further, personal medical service information pertaining to the medical examination of the present day is quickly recorded in the optical disk 4. As described above, the doctor can give diagnosis to the patient based on the display (Step 105).

When the doctor makes a predetermined terminating operation after the diagnosis, the computer 1 carries out a terminating procedure (Step 106) to eject the optical disk 47 from the disk drive unit 3.

The retrieval of personal medical service information from the file 7 of the center system 6 can be made in the same manner as described above. In the case where a large quantity of personal medical service information exists, the information cannot be thoroughly recorded in the optical disk 4. Accordingly, personal medical service information is recorded in fresh order in the optical disk 4. When older personal medical service information than that stored in the optical disk 4 becomes necessary, the retrieval of the information is executed on the file 7.

As described above, personal medical service information is recorded in the optical disk allocated to every person so that the retrieval of necessary personal medical service information can be executed on one optical disk. Accordingly, the quantity of information for the retrieval can be reduced, so that the retrieval time can be shortened remarkably. In general, the capacity of the user's area in a 5.25-inch optical disk is about 300 Mbytes. Assuming now that the image information is for a monochromatic image having resolving power of 1024 x 1024 dots and 256 $(=2^8)$ tones, then information for one image is composed of about 1 Mbytes. Accordingly, about 300 images as personal medical service information can be filed in one optical disk, so that those images serve as a subject of the retrieval. Accordingly, the retrieval can be made speedily compared with the conventional technique in which necessary personal medical information is retrieved from a collective file having personal medical service information pertaining to all patients in a hospital.

Further, personal index information for identifying the possessor of an optical disk is recorded in the optical disk. Accordingly, the true possessor of an optical disk can be exactly compared with the carrier of the optical disk by eyes through display of the image obtained by reproducing the personal index information. Accordingly, personal medical service information for the true patient requiring diagnosis can be obtained with no error, and, at the same time, past personal medical service information can be obtained instantly as materials for diagnosis. It is a matter of course that each optical disk can be used in any one of the medical advice devices.

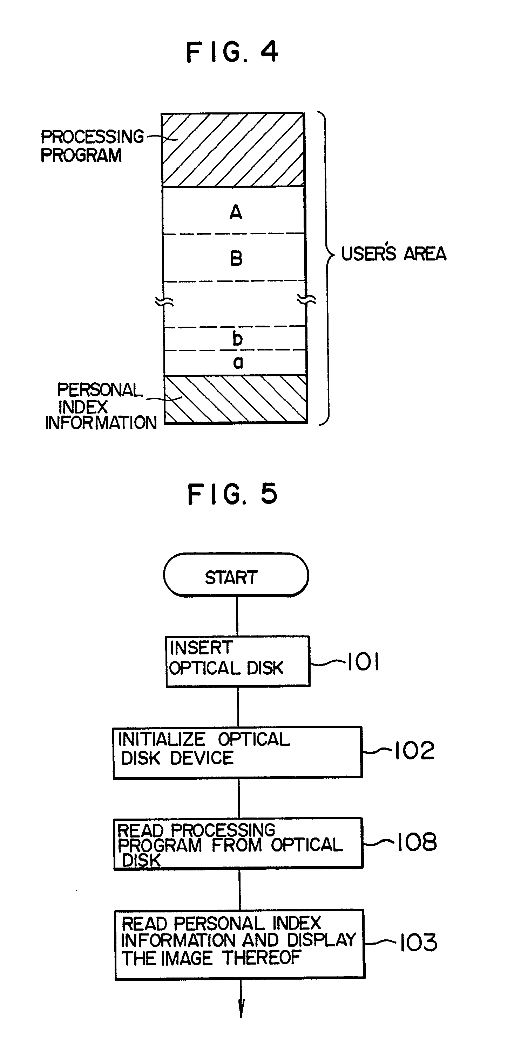

Fig. 4 is a view showing another typical example of the recording information contents of the user's area of the optical disk 4.

Although Fig. 2 shows the case where personal index information together with personal medical service information is recorded in the user's are of the optical disk 4 so that the information can be processed by the host computer 1 according to a processing program stored therein, Fig. 4 shows the case where the processing program for processing both personal medical service information and personal index information is further recorded in the user's area of the optical disk 4 in addition to the personal medical service information and personal index information.

In respect to the optical disk 4 having the user's area as shown in Fig. 4, the processing program for processing both the personal medical service information and personal index information for image display is not stored in the shot computer 1 in Fig. 1. When, for example, the optical disk 4 is inserted in the disk drive unit 3 (Step 101) as shown in Fig. 5, the disk drive unit 3 is initialized (Step 102). After initialization, the processing program is read from the user's area of the optical disk 4 and stored in the host computer 1 (Step 108). The procedure after the Step 108 is executed in the same manner as the Steps 103, 104, ... ... in Fig. 3, so that both the directory information and personal medical service information reproduced from the optical disk 4 are processed by the host computer 1 according to the processing program read out from the optical disk 4.

Also in this specific example, older personal medical service information than that stored in the optical disk 4 can be retrieved from the file 7 of the center system 6. Because the host computer 1 has not the processing program in this example, the processing program must be read out from the optical disk 4 so as to be stored in the host computer 1. The optical disk 4 is always set in the disk drive unit 3, because it is general that personal medical service information is obtained from the file 7 in accordance with the necessity in medical examination.

In this specific example, not only the same effect as in the case where the optical disk as shown in Fig. 2 is used can be obtained but also the capacity of the program memory in the host compute 1 can be reduced. Also in the case where the processing program is stored in the optical disk 4, the recording capacity thereof for personal medical service information is not so specifically influenced.

Although the above embodiment has shown the case where the system is used in one hospital, the present invention can be applied to the case where a large number of hospitals 1, 2 ... ... ..., n are connected to a single center system 6 so that information processing in the hospitals can be made in one and the same format. The results of medical examination on various patients in the hospitals are stored in the file 7 of the center system 6, and, at the same time, the result as personal medical service information for each patient is stored, together with directory information, in the optical disk being in the possession of the patient. The same format is used for all the optical disks 4 used in the hospitals 1, 2, ... ... ..., n. Further, all the medical advice devices set in the hospitals are designed to process personal medical service information according to one and the same processing program. The contents recorded in the user's area of each optical disk are the same as those shown in Fig. 2 or 4.

In this embodiment, one optical disk being in the possession of a patient can be used commonly to the hospitals 1, 2, ... ... ..., n so that the materials for the case history of the patient can be obtained easily and exactly from the optical disk of the patient and from the file 7 even though the patient changes attending hospital from one to another.

Although one embodiment of the present invention has been described, the present invention is not limited to the specific embodiment. For example, as described above, it is to be understood that the present invention can be applied to institutions, such as banking institutions and the like, other than medical institutions, and that recording media, such as magnetic disk, magneto-optical disk, IC memory, optical card, and the like, other than the optical disk can be used as an information recording medium. In short, the conditions of the recording medium used in the present invention are as follows.

(1) The medium must be small in size and light in weight so that the medium is portable. (Most preferably, the medium must have such a size that it can be put into a pocket of clothes of a person. In the case of a disk-like recording medium, the diameter thereof must be selected so as not to be larger than 10 cm.)

(2) The medium must be a nonvolatile memory.

(3) In the case where recording of image information is made, the recording medium must have a large recording capacity of not less than 1 Mbytes per one sheet thereof.
As described above, the recording capacity of about 1 Mbytes is required for one scene of image information with high resolving power. Assuming now that the image information is medical service information, then at least three scenes of image information are required for grasping the change of condition of the patient to give diagnosis to the patient based on the information. Accordingly, suffices it the recording capacity is 3 M bytes or more for image information necessary as materials for diagnosis. On the other hand, the quantity of information required for personal index information may be relatively small, even though the information is image information, so long as the person can be identified. Accordingly, the recording capacity for personal index information M bytes about 2 M bytes if a general data compression method is used.
As described above, the quantity of information for personal index information can be almost neglected compared with the quantity of information for medical service information. Accordingly, the recording capacity of the recording medium may be 3 M bytes or more.
Because at least three scenes of image information are required for medical service information, the recording capacity for the image information may be three times or more as large as the recording capacity for index information even though the index information used has high resolving power.

(4) The recording medium must be in expensive.

(5) The information preservation lifetime of the recording medium must be equal to or longer than the medical information preservation obligatory term provided by the nation (for example, 7 years in the United States, and 15 years in West Germany).

In respect to the limitation of the size of the recording medium in the condition (1), it is preferable that the medium has such external size and thickness that the medium can be put into a pocket of clothes. Further, the method of recording personal medical service information and directory information in the recording medium is not limited to the specific examples as shown in Figs. 2 and 4.

As described above, according to the present invention, a large quantity of image information for persons is shared and separately recorded in recording media respectively correspondingly allocated to the persons so that the retrieval of image information is made for every recording medium. Accordingly, the quantity of information as a subject of once retrieval can be reduced remarkably, so that the retrieval time can be shortened remarkably. Further, image information which has been unable to be recorded because of the limitation of capacity of the recording medium can be retrieved from a file, so that all the quantity of image information can be retrieved. Further, in the case where image information obtained from a plurality of hospitals is registered in the file, image information obtained from all of the hospitals can be used in every hospital.

Further, according to the present invention, information having a very large quantity when gathered for all persons is shared and separately recorded in recording media correspondingly respectively allocated to various persons to make it possible to retrieve information for every recording medium, so that the quantity of information to be retrieved can be reduced remarkably to make speedy retrieval possible. Further, the correspondence between the recording medium and the true possessor thereof can be exactly and easily checked by eyes through displaying the personal index information recorded in the recording medium, so that necessary information can be retrieved exactly.

Further, according to the present invention, information having a very large quantity when gathered fore all persons is shared and separately recorded in recording media correspondingly respectively allocated to the persons to make it possible to retrieve information for every recording medium, so that the quantity of information to be retrieved can be reduced remarkably to make speedy retrieval possible, and furthermore, there is no necessity of storing any information processing program in the host computer. Accordingly, not only the capacity of the memory for the program can be reduced but also it is made possible to use various image display systems.

## Claims

1. An information management system comprising a single file (7) carrying image information registered therein for various persons and a plurality of retrieval units (3) each provided with a display unit (5) for displaying images thereon, so that necessary image information for a person is retrieved from said file through selected one of said retrieval units and images represented by the retrieved necessary image information are displayed on said display unit of said selected retrieval unit, said information management system further comprising a recording medium allocated to every person, in which a part of or all of the image information for a person is recorded from said file onto the recording medium allocated for the person so that the necessary image information for the person is retrieved from said recording medium for the person through selected one of said retrieval units and displayed on said display unit of said selected retrieval unit.

2. An information management system according to Claim 1, in which said recording medium is an optical disk (4).

3. An information management system according to Claim 1 or 2, in which said image information is medical service information including X-ray photographs, computerized tomograms, and the like, said medical service information being stored in said recording medium in fresh order.

4. An information management system comprising a drive unit (3) for driving a recording medium (4) carrying image information recorded thereon, a host computer (1) for controlling said drive unit and for processing image information, and a display unit (5) for displaying an image, so that said recording medium is loaded in said drive unit to reproduce necessary image information from said recording medium under the control of said host computer so as to display, on said display unit, an image represented by the reproduced necessary image information on said display unit, wherein said recording medium has a user's area in which personal index information of the possessor of said recording medium is recorded so that it is possible to identify the possessor of said recording medium by a displayed image obtained by reproducing said index information on said display unit.

5. An information management system comprising a drive unit (3) for driving a recording medium (4) carrying image information recorded thereon, a host computer (1) for controlling said drive unit and for processing image information, and a display unit (5) for displaying an image, so that said recording medium is loaded in said drive unit to reproduce necessary image information from said recording medium under the control of said host computer so as to display, on said display unit, an image represented by the reproduced necessary image information on said display unit, wherein said recording medium has a user's area carrying various kinds of image information recorded therein and pertaining to the possessor of said recording medium, said user's area including a specific area carrying a processing program recorded therein, and wherein said processing program is read out from said recording medium and stored in said host computer so that said image information read out from said recording medium is processed by said host computer in accordance with said processing program and the processed information is fed to said display unit.

6. An information management system according to Claim 5, in which personal index information pertaining to the possessor of said recording medium is recorded in another predetermined area in said user's area of said recording medium so that said index information is reproduced and processed by said host computer in accordance with said processing program, and the processed index information is fed to said display unit so as to display an image represented by said index information to thereby identify the possessor of said recording medium on the basis of the displayed image.

7. An information recording medium in the possession of every person for use in an information management system having a drive unit (3) for driving said recording medium, a host computer (1) for controlling said drive unit and for processing image information fed from said drive unit, and a display unit (5) for displaying said image information processed by said host computer, said information recording medium having an area for recording at least index information for identifying the possessor of said recording medium and image information pertaining to said possessor, said recording medium being capable of being carried by said possessor.

8. An information recording medium according to Claim 7, in which said area has a capacity of not less than 3 M bytes.

9. An information recording medium according to Claim 7, in which the recording capacity in a range for recording said image information in said area is three times or more as large as the capacity in a range for recording said index information in said area.

10. An information recording medium according to any one of Claims 7, 8 and 9, in which said information recording medium is shaped like a disk having a diameter of not larger than 10 cm.

11. An information recording medium according to Claim 10, in which said information recording medium is an optical disk (4).

12. An information recording medium according to Claim 10, in which said information recording medium is a magneto-optical disk.

13. An information management system comprising a central information filing unit (6) carrying image information for every person electronically recorded/ registered therein, a plurality of retrieval units (3) for retrieving color image, and a plurality of color image display units (5) correspondingly respectively connected to said retrieval units, wherein a recording medium allocated to every person and carrying personal identification image information and personal image data recorded thereon is provided so that the image information for the person registered in said information filing unit is recorded into said recording medium through retrieval, collation and identification based on personal identification image information allocated to every person, whereby by use of said recording medium, necessary image information is retrieved and displayed as an image.

14. An information management system comprising a central information filing unit (6) carrying image information for every person electronically recorded/registered therein, a plurality of retrieval units (3) for retrieving color image, and a plurality of color image display units (5) correspondingly respectively connected to said retrieval units, wherein said system can operate only when a recording medium having a predetermined image recording capacity is used as a recording medium which is allocated to every person and in which personal identification image and personal image data are to be recorded.

15. An information management system according to Claim 14, in which said recording medium is an optical recording medium (4) capable of erasing recording information.

16. An information management system comprising a central information filing unit (6) carrying image information for every person electronically recorded/registered therein, a plurality of retrieval units (3) for retrieving color image, and a plurality of color image display units (5) correspondingly respectively connected to said retrieval units, wherein when a recording medium which is allocated to every person and in which personal identification image and personal image data are to be recorded is verified with personal identification image information registered in said information filing unit, image information is additionally recorded in said recording medium automatically.

17. An information management system according to Claim 16, in which said recording medium is an optical recording medium (4) capable of erasing recording information.

FIG. 1

FIG. 2

# F I G. 3

START

INPUT OPTICAL DISK — 101

INITIALIZE DISK DRIVE UNIT — 102

READ PERSONAL INDEX INFORMATION AND DISPLAY THE IMAGE THEREOF — 103

CORRECT OPTICAL DISK ? — 104    NO

YES — 105

REPRODUCE PERSONAL MEDICAL SERVICE INFORMATION AND DISPLAY THE IMAGES THEREOF — 105

TERMINATING PROCESSING — 106

EJECT OPTICAL DISK — 107

# FIG. 4

PROCESSING PROGRAM

A

B

b

a

PERSONAL INDEX INFORMATION

USER'S AREA

# FIG. 5

START

INSERT OPTICAL DISK — 101

INITIALIZE OPTICAL DISK DEVICE — 102

READ PROCESSING PROGRAM FROM OPTICAL DISK — 108

READ PERSONAL INDEX INFORMATION AND DISPLAY THE IMAGE THEREOF — 103

# F I G. 6